# FASCICULE DE BREVET EUROPEEN

(11) **EP 2 027 502 B1**
(45) Date de publication et mention de la délivrance du brevet: **06.10.2010**
(21) Numéro de dépôt: 07730984.7
(22) Date de dépôt: 15.02.2007
(51) Int. Cl.: G02B 26/10, G02B 26/12

(54) **MOTEUR DE VIDEO PROJECTION / NUMERISEUR A BALAYAGE MULTIFAISCEAUX ELECTROMAGNETIQUES**
MOTOR FÜR VIDEOPROJEKTION / DIGITALISIERER MIT MEHREREN ELEKTROMAGNETISCHEN STRAHLEN
ENGINE FOR VIDEO PROJECTION / DIGITISER WITH MULTIPLE BEAM OF ELECTROMAGNETIC RADIATION

(30) Priorité: 16.02.2006 FR 0601364
(43) Date de publication de la demande: 25.02.2009
(73) Titulaire: BreizhTech SAS, 22520 Binic (FR)
(72) Inventeur: DESAULNIERS, Jean-Marc, F-22520 BINIC (FR)
(86) Numéro de dépôt international: PCT/FR2007/000273
(87) Numéro de publication internationale: WO 2007/093711

(56) Documents cités:
- EP-A- 0 553 504
- EP-A2- 1 345 455
- WO-A-2006/059007
- US-A- 4 297 723
- US-A- 5 786 924

## Description

La présente invention concerne un dispositif réalisant la vidéo projection numérique multifaisceaux électromagnétiques, p.ex. de type optique visible, infrarouge, ultraviolet, micro-onde, sur une surface et / ou dans un volume quelconque(s) en 2D/3D, à l'intérieur d'un angle solide de 0° à 360°, p.ex. de 180°/270°/360°, utilisant comme source lumineuse, p.ex. un certain nombre de lasers faible / moyenne / forte puissance. L'insertion d'un ensemble de capteurs couplés aux sources permet l'utilisation du dispositif en mode numériseur et / ou radar en 2D/3D, à l'intérieur dun angle solide de 0° à 360°, p.ex. \de 180°/270°/360°. Les domaines d'utilisations de invention peuvent être : la vidéo projection numérique sur une surface et / ou un volume, les télécommunications, au niveau navigation routière, maritime, aérienne ou spatiale.

Les projections sur des écrans à 360° sont souvent réalisées par une déclinaison des installations à écrans multiples. Un ruban d'écran s'enroule autour d'une pièce circulaire pour offrir au spectateur la vision en 360° d'un paysage, d'un évènement. Un autre type de projection, qui peut-être utilisée dans un planétarium, est l'implémentation d'un certain nombre de vidéo projecteurs classiques, p.ex. de type DLP, LCD, GLV ou CRT, p.ex diffusant le spectacle sur un dôme.

La projection dans un dôme en 3D peut-être réalisée sur le principe du procédé IMAX Solido^{®} où les images sont projetées sur un écran hémisphérique, p.ex. à l'aide de lentille de type "oeil de poisson". L'effet de relief est restitué par des lunettes à cristaux liquides. La projection alterne deux images : une pour chaque oeil. Chaque verre devient opaque alternativement sur ordre d'un signal issu du projecteur, permettant à chaque oeil de recevoir uniquement l'image qui lui est destinée.

Plusieurs approches sont également développées pour la création de système de projecteur à base de balayage. L'une d'elle, p.ex. est l'utilisation d'un système de projecteur et d'un miroir de déflection. Celui-ci, mobile sur deux axes de l'espace permet de balayer un écran, p.ex. hémisphérique. L'image vidéo est alors découpée par un traitement numérique en une combinaison d'un certain nombre de portions d'images balayées sur l'écran à une vitesse suffisante pour tromper l'oeil humain et lui donner l'impression d'une seule image. C'est ce principe, qui est souvent retenu pour créer un système de projection à base de faisceaux Laser, p.ex. rouge, vert, bleu, qui permet de créer une séquence d'images couleur animées, grâce à une modulation par les informations de l'image et à une déflection rapide des faisceaux.

Une autre approche est d'utiliser un certain nombre de faisceaux ayant des tailles différentes, un très large, un moyen et un très fin. Un traitement numérique de l'image, notamment au niveau des couleurs permet de moduler chacun des faisceaux qui sont déviés par des actuateurs pour balayer l'écran, créant l'image par la superposition de tâches lumineuses.

Un dispositif de vidéo projection/vidéo capteur numérique avec une source laser et avec un miroir polygonal est décrit dans la demande européenne EP-A-0 553 504 publiée le 4.8.1993.

La plupart de ces équipements souffrent, dans le cas de la vidéo projection classique, de la faible résolution, et / ou du coût important de la technologie mise en oeuvre entre autre lors du tournage ou de la projection du documentaire ou de l'oeuvre cinématographique. Les installations comportant plusieurs projecteurs pour couvrir l'écran ont, elles, des problèmes au niveau des zones de recouvrement des images, ainsi qu'au niveau du respect de l'uniformité de la couleur sur la surface ou le volume de projection, du fait de l'utilisation de plusieurs équipements différents. Les projecteurs à base de laser manquent la plupart du temps de stabilisation, au niveau spatial de l'image et / ou ont une résolution trop faible pour projeter une image de qualité équivalente au projecteur à base de pellicule.

Le système selon l'invention permet de reproduire et / ou capturer une séquence d'images couleur, à l'aide d'un certain nombre de sources lumineuses, sur une surface et / ou dans un volume quelconque(s). L'enjeu est de préserver à la sortie les caractéristiques intrinsèques du signal d'origine (gamme, mélange, température de la couleur, résolution / définition, niveau de contraste) et ce sur une surface et / ou dans un volume quelconque(s).

La vidéo projection/numérisation/détection radar, réalisée par un système presque entièrement optique, traitant des faisceaux électromagnétiques, p.ex. de type optique visible, infrarouge, ultraviolet, micro-onde, et comportant des miroirs/filtres, est optimisée par le fait qu'elle n'implique qu'une série de réflexions/transmissions sur disques optiques rotatifs, qui en définitive ne subiront qu'une usure mécanique très réduite. Le principe de fonctionnement implique le balayage multifaisceaux de la surface ou du volume, utilisés comme écran, par réflexions/transmissions successives d'un certain nombre de faisceaux issus, p.ex. d'un certain nombre de sources lumineuses, p.ex. des lasers de faible / moyenne / haute puissance, couplé à un certain nombre de sources optiques, de modules sources optiques, de générateurs de faisceaux colorés ou de têtes matricielles optiques. La fonction de numérisation utilise, p.ex. un certain nombre de dispositifs de captures, p.ex. de type photodiodes, dispositif à transfert de charge (CCD),... Les disques optiques rotatifs présents dans le dispositif permettent la génération d'un balayage dans l'espace. Un périscope d'adressage permet de structurer un certain nombre de sources afin de réaliser un balayage avec un certain nombre de faisceaux sur une surface et / ou dans un volume quelconque(s).

Selon les modes particuliers de réalisation, il est possible d'ajouter au dispositif une structure de support de fenêtres miroirs/filtres permettant, p.ex. un multiplexage spatial, fréquentiel ou temporel complémentaire aux faisceaux sources.

Les dessins annexés illustrent l'invention :
La figure 1 représente, en perspective, un schéma simplifié de la structure du dispositif de vidéo projection numérique à balayage multifaisceaux optique permettant la projection sur une surface et / ou dans un volume quelconque(s) et / ou la capture/numérisation 2D/3D, à l'intérieur d'un angle solide de 0° à 360°, p.ex. de 180°/360°.
La figure 2 représente, en coupe, une vue schématique de différentes architectures de la structure du dispositif de vidéo projection numérique à balayage multifaisceaux optique.
La figure 3 représente, en perspective, un support de fenêtres miroirs/filtres, p.ex. en forme de globe, ainsi qu'une une vue éclatée pour détailler le positionnement des fenêtres miroirs/filtres.
La figure 4 représente, en perspective, différentes possibilités de balayage d'un miroir/filtre composant le dispositif de vidéo projection numérique à balayage multifaisceaux optique.
La figure 5 représente, en perspective, un périscope d'adressage pour dispositif de vidéo projection et / ou capture numérique à balayage multifaisceaux composé d'un cône de déviation.
La figure 6 représente, en perspective, un périscope d'adressage pour dispositif de vidéo projection et / ou capture numérique à balayage multifaisceaux composé, p.ex. de deux cônes de déviation en vis à vis.
La figure 7 représente, en perspective, un périscope d'adressage pour dispositif de vidéo projection et / ou capture numérique à balayage multifaisceaux adressant, p.ex. un disque multipiste avec un certain nombre de modules sources optiques et / ou de têtes matricielles optiques, p.ex. de type couronne/pyramide ou pavés de miroirs/filtres.
La figure 8 représente, en vue de dessus, un périscope d'adressage, p.ex. composé d'un cône ou d'une pyramide, pour dispositif de vidéo projection et / ou capture numérique à balayage multifaisceaux adressant un disque multipiste avec un certain nombre de modules sources optiques et / ou de têtes matricielles optiques, p.ex. de type couronne/pyramide ou pavés de miroirs/filtres.
La figure 9, représente, en perspective, un périscope d'adressage pour dispositif de vidéo projection et / ou capture numérique à balayage multifaisceaux adressant un disque multipistes avec un certain nombre de modules sources optiques et / ou de têtes matricielles optiques, p.ex. de type couronne/pyramide ou pavés de miroirs/filtres, répartis sur un certain nombre d'étages permettant d'adresser simultanément un certain nombre de miroirs/filtres répartis sur un certain nombre de pistes.
La figure 10 représente, en coupe, une vue simplifiée d'un disque optique rotatif multipistes et d'un certain nombre de périscopes d'adressage.
La figure 11 représente, en vue de dessus et de côté, une pyramide et un cône de déviation d'un périscope d'adressage pour dispositif de vidéo projection et / ou capture numérique à balayage multifaisceaux.
La figure 12 représente, en perspective, deux variantes de disque optique rotatif avec un périscope d'adressage embarqué et de couloir optique permettant l'adressage par la tranche.
La figure 13 représente, en coupe, les variantes de têtes matricielles optiques de type couronne/pyramide ou pavés de miroirs/filtres.
La figure 14 représente, en perspective, des variantes de bloc de modules sources optiques et / ou de générateurs de faisceaux colorés permettant l'adressage, simultané ou non, de plusieurs pistes et / ou miroirs/filtres d'un disque optique rotatif par le biais d'un périscope d'adressage ou non.
La figure 15 représente, en coupe, une vue simplifiée de plusieurs arrangements possibles des pyramides et / ou cône pour périscope d'adressage et / ou de tête matricielle optique.
La figure 16 représente, en vue de dessus, le premier étage d'une tête matricielle optique de moteur de vidéo projection numérique à faisceaux composée d'un dispositif pyramidal support de facettes réfléchissantes, d'anneaux et de modules sources optiques.
La figure 17 représente, en coupe, une variante d'organisation des miroirs/filtres d'un périscope d'adressage pour dispositif de vidéo projection et / ou capture numérique à balayage multifaisceaux.
La figure 18 représente, en perspective, un dispositif de réglage d'assiette composé, p.ex. de vis, micro-vérin, piézoélectrique,... pouvant être adapté sur différents éléments d'un équipement de vidéo projection et / ou capture numérique à balayage multifaisceaux.
La figure 19 représente, en perspective et en coupe, une platine de rotation et de sustentation sur coussin d'air pour dispositif de vidéo projection et / ou capture numérique à balayage multifaisceaux.

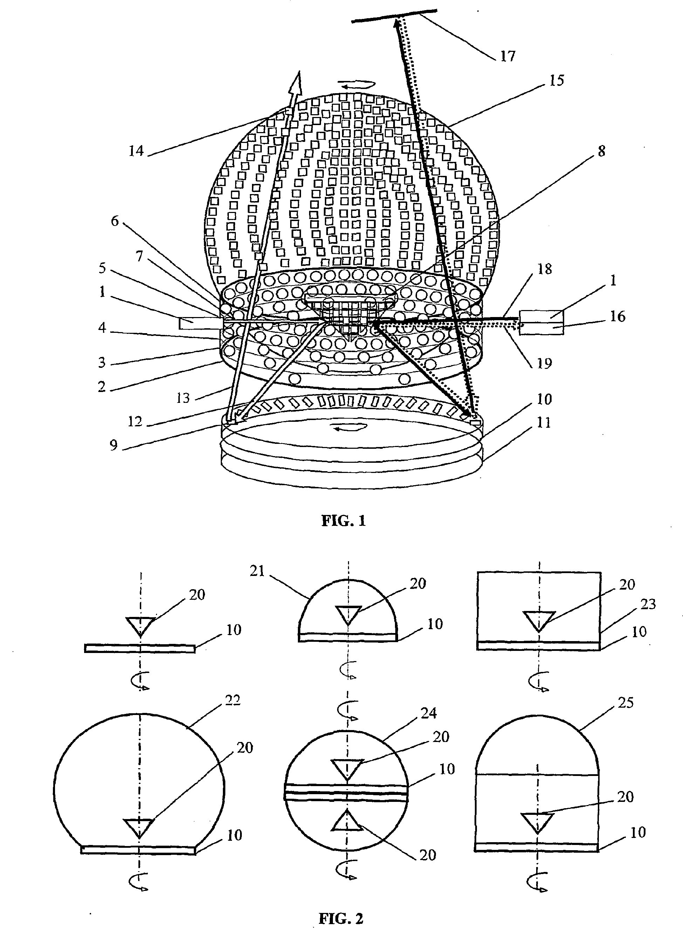

En référence à ces dessins, le dispositif de vidéo projection numérique à balayage multifaisceaux optique (FIG. 1), permettant la projection sur une surface et / ou dans un volume quelconque(s) et / ou la capture/numérisation 2D/3D, à l'intérieur d'un angle solide de 0° à 360°, p.ex. de 180°/270°/360°, est composé d'un certain nombre de sources (1) réparties de façon spécifique sur un certain nombre d'étages, ou couronnes, p.ex. (2), (3), (4), (5) et (6). Les sources utilisées, p.ex. de type laser de faible/moyenne/forte puissance, peuvent être intégrées, p.ex. dans des modules sources optiques, des générateurs de faisceaux colorés, dans un certain nombre de têtes matricielles optiques, p.ex. de type couronne/pyramide ou pavés de miroirs/filtres. Les faisceaux lumineux collimatés ou très faiblement divergents, p.ex. (7) issus des sources (1), sont orientés vers un périscope d'adressage (8). Grâce à un certain nombre de miroirs/filtres disposé de façon spécifique, p.ex. sur une pyramide (8) et / ou un cône d'adressage, le périscope d'adressage renvoie les faisceaux issus des sources, p.ex. (1), vers un certain nombre de miroirs/filtres, p.ex. (9), disposés sur un certain nombre de disques optiques rotatifs, p.ex. (10) et (11), asservis numériquement. Les miroirs/filtres, p.ex. (9) des disques optiques rotatifs ont une orientation selon des angles spécifiques permettant de réfléchir les faisceaux incidents, p.ex. (12) en un certain nombre de faisceaux, p.ex. (13) traversant une fenêtre miroir/filtre spécifique, p.ex. (14) positionnée sur une structure, p.ex. en forme de globe tronqué (15). Cette fenêtre miroir/filtre, p.ex. (14) dévie ou non le faisceau selon un angle spécifique. Au cours d'une rotation complète, les disques optiques rotatifs, p.ex. (10) et (11) présentent aux faisceaux incidents, p.ex. (12) une succession de combinaisons de miroirs/filtres imposant un mouvement de balayage de l'espace. Selon les configurations possibles, le globe tronqué (15) et / ou le périscope d'adressage (8) sont en rotation ou non.

Un asservissement numérique de la vitesse de rotation des disques optiques rotatifs, p.ex. (10) et (11), et / ou du globe tronqué (15), complété d'un allumage synchronisé des sources, permet le balayage de l'espace, projetant ainsi une séquence d'images composées d'un certain nombre de pixels, sur une surface et / ou dans un volume quelconque(s). En alimentant ce moteur de vidéo projection numérique à balayage multifaisceaux optique avec un générateur de faisceaux colorés et / ou une tête matricielle optique, p.ex. de type couronne/pyramide et / ou pavés de miroirs/filtres, il est ainsi possible de projeter, p.ex. une séquence d'images vidéo sur une surface et / ou dans un volume quelconque(s) 2D/3D, à l'intérieur d'un angle solide de 0° à 360°, p.ex. de 180°/270°/360°.

Le couplage d'une fonction de capture, p.ex. (16) avec chaque source, p.ex. (1) permet l'enregistrement du signal réfléchi par une surface et / ou dans un volume quelconque(s), p.ex. (17), dans la zone balayée par le dispositif de vidéo projection numérique à balayage multifaisceaux optique. Celui-ci est alors utilisé en mode numériseur et / ou radar qui, avec l'envoi et la réception, dans une direction donnée de l'espace, d'un signal modulé, p.ex. une modulation d'amplitude d'un signal ayant une longueur d'onde spécifique, permet de déterminer la distance à laquelle se trouve cette surface, p.ex. (17) grâce à la mesure, p.ex. du décalage temporelle, ou désynchronisation, du signal reçu par le capteur après un trajet aller, p.ex. (18) et retour, p.ex. (19). Cette désynchronisation est souvent appelée "temps de vol" de l'onde qui, multiplié par sa vitesse de propagation, permet d'en déduire la distance.

Dans toute la suite du document, les modules sources peuvent être complétés par un système de capture permettant de réaliser une fonction de type numériseur et / ou radar d'une surface et / ou dans un volume quelconque(s) en 2D ou 3D. Les faisceaux électromagnétiques utilisés peuvent être, p.ex. de type optique visible, infrarouge, ultraviolet, ou de tout autre domaine fréquentiel adapté au milieu environnant et / ou aux mesures à effectuer.

Selon les variantes de réalisations (FIG. 2), le dispositif de vidéo projection et / ou de capture numérique à balayage multifaisceaux optique, est composé d'un certain nombre de disques optiques rotatifs, p.ex. (10) et d'un périscope d'adressage, p.ex. en forme de pyramide (8) ou cône inversé (20). Il peut-être complété par une structure, fixe ou en rotation, support d'un certain nombre de fenêtres miroirs/filtres spécifiques (14). En fonction de l'espace à balayer, cette structure peut avoir, p.ex. la forme d'un arceau quelconque, d'un certain nombre d'arcs, d'un demi globe (21), d'un globe tronqué (22), d'un globe complet (24) comprenant, p.ex. deux disques optiques rotatifs, p.ex. (10), avec un périscope d'adressage, p.ex. (20), d'un cylindre (23), surmonté ou non d'un demi-globe (25).

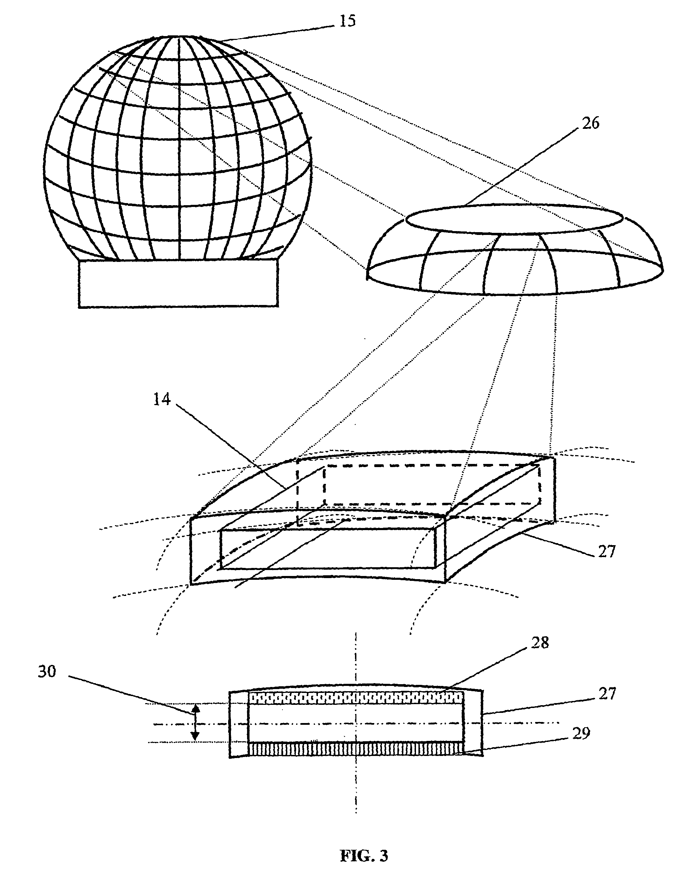

Cette structure support de fenêtres miroirs/filtres (FIG. 3), p.ex. en forme de globe tronqué (15) est composée d'un certain nombre de couronnes supports de fenêtres miroirs/filtres, p.ex. (26) sur lesquelles sont positionnées un certain nombre de fenêtres miroirs/filtres, p.ex. (14) dans une petite cavité, p.ex. (27). Les fenêtres miroirs/filtres, p.ex. (14) ont un certain nombre de caractéristiques spécifiques passives ou actives permettant de modifier un certain nombre de propriétés physiques des faisceaux le traversant sur une zone donnée, p.ex. un filtrage spatial, fréquentiel, temporel. En fonction des applications visées, les fenêtres miroirs/filtres, p.ex. (14) pourront être composées d'un empilement de couches traitées, p.ex. (28) et (29) avec un procédé de métallisation, et plus ou moins distantes, p.ex. (30). Les fenêtres miroirs/filtres pourront avoir un traitement, p.ex. de type gradient en longueur d'onde permettant, p.ex. la sélection en longueur d'onde du faisceau le traversant en fonction du balayage imposé au faisceau par les disques optiques rotatifs.

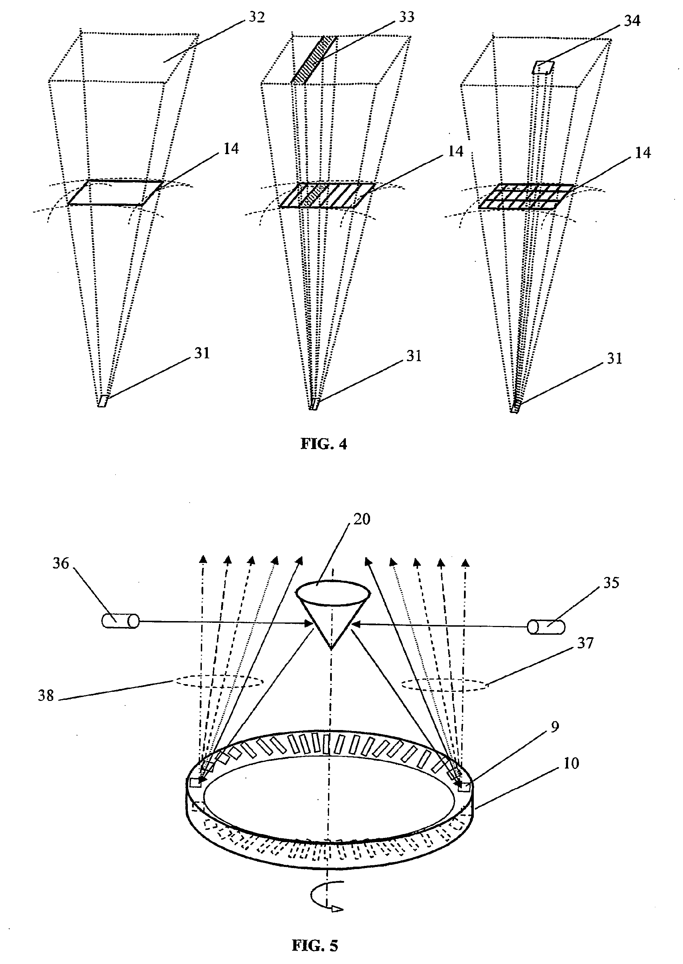

La forme des fenêtres miroirs/filtres est spécifique en fonction de la structure les supportant. Elles peuvent être, p.ex. rectangulaires, trapézoïdales, circulaires délimitant ainsi un espace ou volume de balayage, p.ex. en forme de cornet (32) ou pyramide. Grâce aux disques optiques rotatifs composant le dispositif de vidéo projection et / ou de capture numérique à balayage multifaisceaux optique, les fenêtres miroirs/filtres, p.ex. (14) sont balayées (FIG. 4) par un faisceau issu d'une source, p.ex. de type ou forme rectangulaire (31). Selon la taille de la source et / ou la période de synchronisation temporelle spécifique, la fenêtre miroir/filtre est balayée, p.ex. en entier (32), selon une ligne (33) ou selon un point (34). Il est alors possible, en fonction des caractéristiques de la fenêtre miroir/filtre, p.ex. (14) et d'une synchronisation spécifique des disques optiques rotatifs, de sélectionner une caractéristique de filtrage différente pour une même zone d'adressage. La structure support de fenêtres miroirs/filtres, p.ex. en forme de globe tronqué (15), permet de réaliser des fonction de multiplexage et / ou de filtrage spatial / fréquentiel / temporel. L'ensemble des fenêtres miroirs/filtres sur la structure peuvent être actives, p.ex. de type semiconducteur, photodiode permettant d'intégrer la fonction d'enregistrement.

Le périscope d'adressage, p.ex. (FIG. 5) au sein du dispositif de vidéo projection et / ou de capture numérique à balayage multifaisceaux optique, est composé, p.ex. d'un cône d'adressage (20) support de miroirs/filtres permettant de déporter un certain nombre de sources/capteurs, p.ex. (35) et (36) répartis sur un certain nombre d'étages/couronnes. Ce type de périscope d'adressage permet de ne pas encombrer l'espace de balayage des faisceaux, p.ex. (37) et (38) au dessus des disques optiques rotatifs, p.ex. (10).

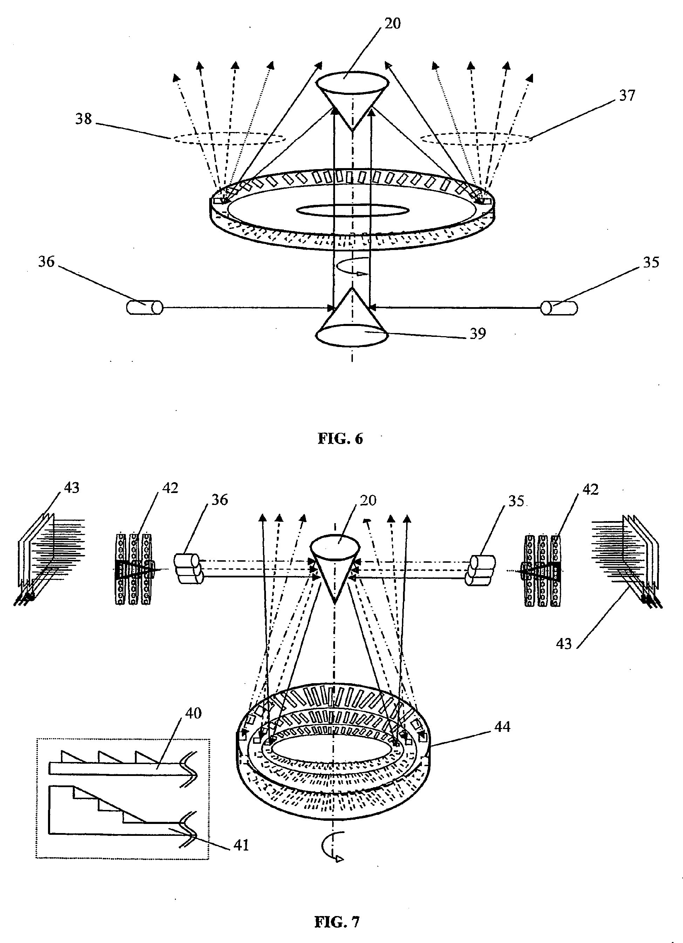

Il est possible (FIG. 6) de compléter le périscope d'adressage précédemment décrit avec, p.ex. un autre cône d'adressage (39) en vis-à-vis du premier, en dessous des disques optiques rotatifs comportant un trou central. Cette configuration de périscope d'adressage permet, p.ex. l'élargissement de la zone de balayage imposée par les disques optiques rotatifs, p.ex. (37) et (38).

Dans le but de densifier le nombre de faisceaux simultanément balayés par le dispositif de vidéo projection et / ou de capture numérique à balayage multifaisceaux optique (FIG. 7), il est possible d'utiliser des disques optiques rotatifs multipistes, p.ex. (44) comportant un arrangement spécifique de miroirs/filtres, p.ex. sur la surface (40) ou en marches d'escalier (41), ayant une orientation spécifique permettant le balayage d'une surface et / ou dans un volume quelconque(s) en 2D ou 3D. Selon les variantes possibles, chaque piste du disque optique rotatif peut-être adressée, p.ex. à l'aide d'un cône de périscope d'adressage (20) comportant un certain nombre de miroirs/filtres, par un certain nombre de modules sources optiques, p.ex. (35) et (36), et / ou de têtes matricielles optiques, p.ex. de type couronne/pyramide (42) et / ou pavés de miroirs/filtres (43), répartis sur un certain nombre d'étage/couronnes. Chaque étage adresse, p.ex. une piste du disque optique rotatif multipiste.

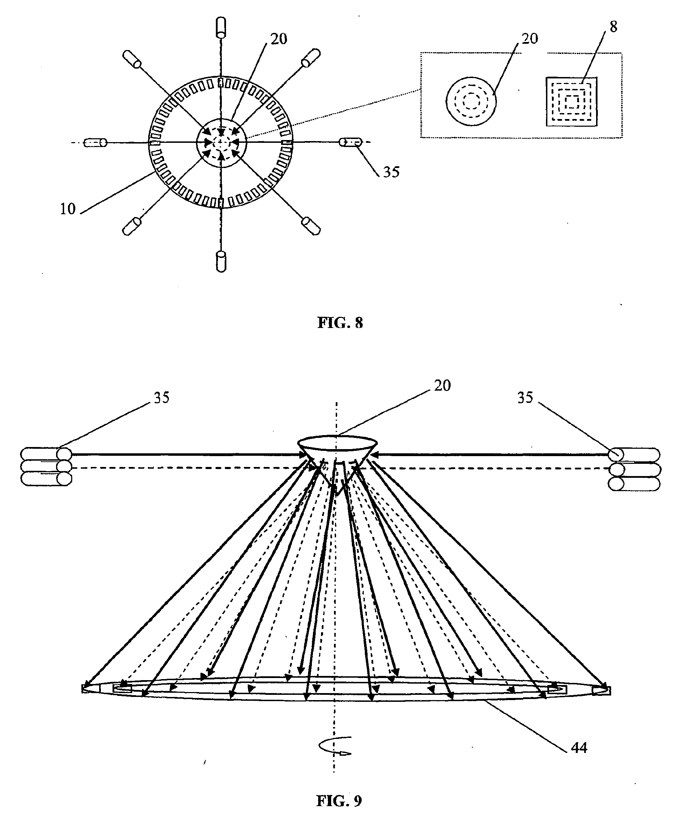

Il est de plus possible, p.ex. (FIG. 8) de répartir, selon une organisation spécifique, un certain nombre de sources sur chaque étage/couronne afin d'adresser simultanément plusieurs secteurs d'un même disque optique rotatif, p.ex. (10) grâce à un périscope d'adressage, p.ex. en forme de cône (20) ou de pyramide (8). L'utilisation, p.ex. (FIG. 9) d'un certain nombre de ces étages/couronnes permet d'adresser un disque optique rotatif multipistes, p.ex. (44) simultanément sur un certain nombre de secteurs répartis sur un certain nombre de pistes.

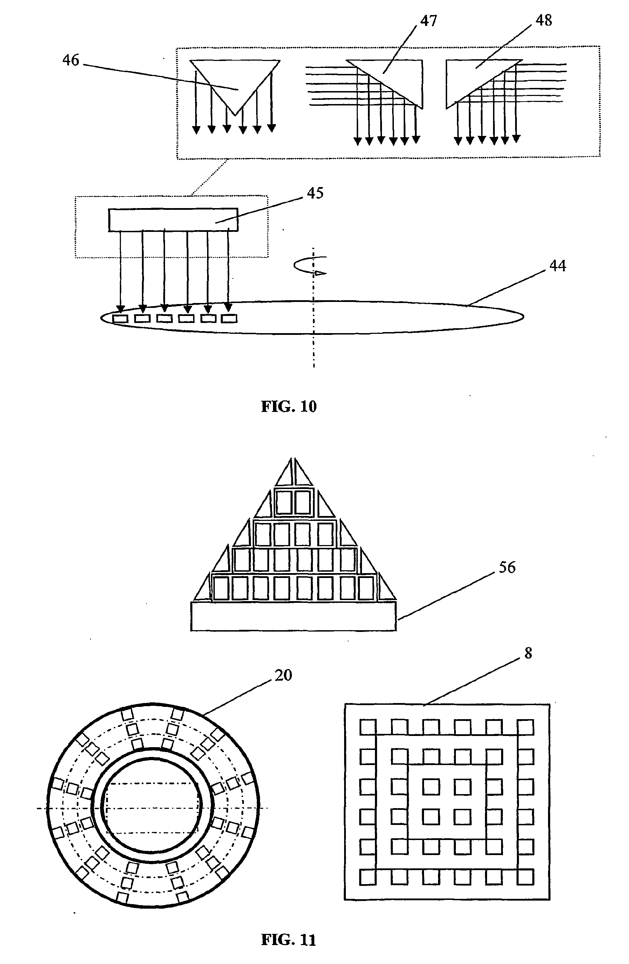

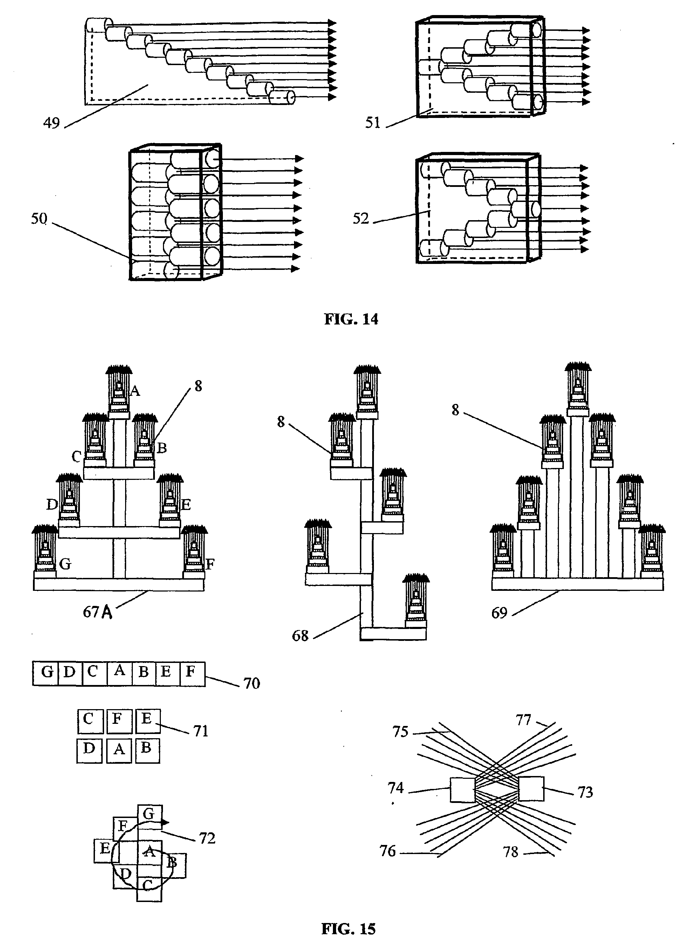

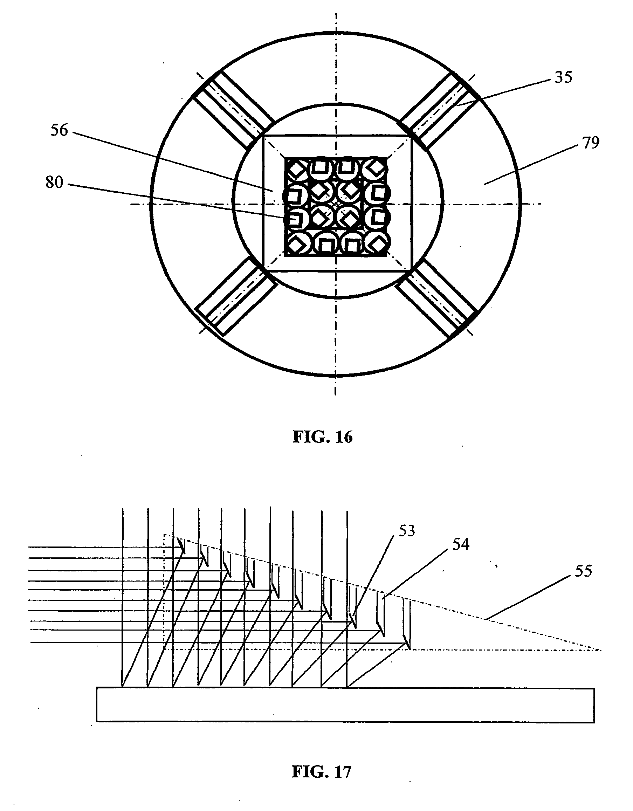

Pour les disques optiques rotatifs multipistes (44), plusieurs variantes d'agencement des sources et de périscopes d'adressages sont possibles (FIG. 10), (FIG. 14) et (FIG. 17) : p.ex. en ligne (45), selon un triangle isocèle (46) ou un triangle rectangle (47) ou (48). L'agencement des sources optiques doit permettre de réaliser un ensemble d'un certain nombre de faisceaux colinéaires dans un encombrement réduit sans modification des caractéristiques ou propriétés intrinsèques des faisceaux. Selon les variantes de réalisation possibles, l'agencement des sources (45) peut être, p.ex. (FIG. 14) sous la forme de marches d'escalier (49), en quinconce (50), en forme de "V " (51) et (52), ou tout autre arrangement géométrique permettant d'obtenir un groupe d'un certain nombre de faisceaux colinéaires régulièrement espacés. Selon les variantes possibles de réalisation, les miroirs/filtres du périscope d'adressage (FIG. 17) peuvent être réalisés, p.ex. avec un certain nombre de petits miroirs/filtres (53) sur des supports (54), maintenus en place par un support (55) selon p.ex. des marches d'escalier. Ce support pouvant être monté sur des éléments de correction dynamique de type vis, micro-vérins, piézoélectrique...

Selon les variantes de réalisation, le dispositif (FIG. 11) de déviation du périscope d'adressage comporte un certain nombre de supports de miroirs/filtres répartis sur un certain nombre d'étages et un socle (56), p.ex. circulaire pour le cône (20), ou carré pour une pyramide (8).

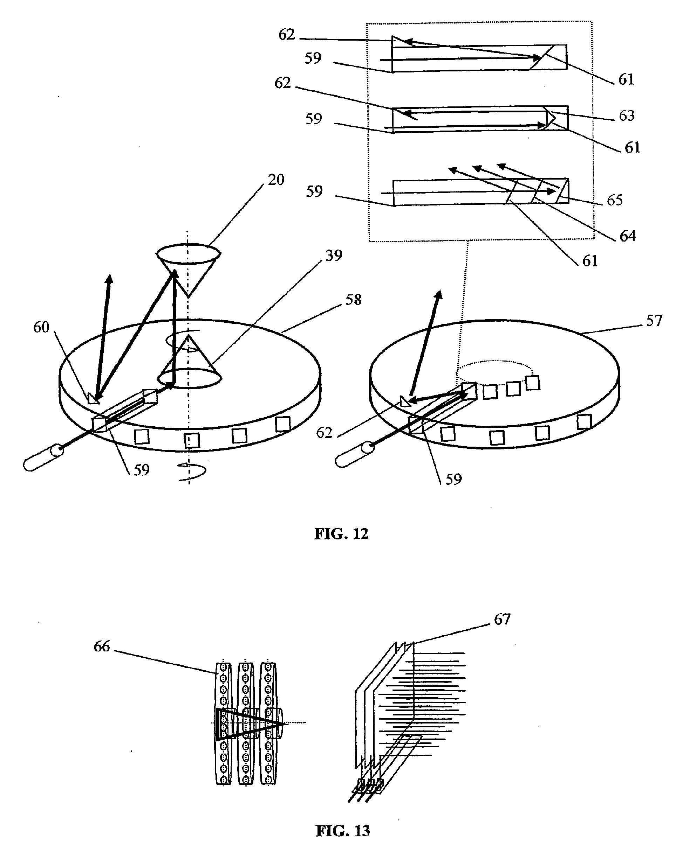

Différentes variantes pour les disques optiques rotatifs (FIG. 12) sont possibles, p.ex. (57) et (58) comportant un certain nombre de couloirs optiques, p.ex. (59) qui permet un adressage, p.ex. d'un périscope embarqué de type cône (39) en rotation ou non, placé sur l'axe du disque optique rotatif Le périscope embarqué autorise l'adressage des miroirs/filtres répartis sur les pistes, p.ex. (60) en surface du disque optique rotatif grâce à, p.ex. un autre périscope d'adressage de type cône (20). Une autre variante de disque optique rotatif est de placer en extrémité de chaque couloir, p.ex. (59) un certain nombre de miroirs/filtres, p.ex. (61) permettant de renvoyer le faisceau se propageant dans le couloir optique vers les miroirs/filtres, p.ex. (62) en surface du disque optique rotatif. De même, il est possible de positionner un certain nombre de miroirs/filtres, p.ex. (61) et (63) renvoyant le faisceau arrivant du couloir optique dans la direction opposée, p.ex. légèrement au-dessus, vers un miroir/filtre (62) inséré dans la masse du disque optique rotatif. Une fonction de filtrage supplémentaire peut être obtenue grâce à une succession de miroirs/filtres, p.ex. (61), (64) et (65) en extrémité du couloir optique réalisant p.ex. un filtrage en longueur d'onde.

Afin d'augmenter la résolution du dispositif de vidéo projection et / ou capture numérique à balayage multifaisceaux optique, il est possible d'utiliser une tête matricielle optique (FIG. 13), p.ex. de type couronne/pyramide (66) et / ou pavés de miroirs/filtres (67). Ces deux têtes matricielles optiques permettent, grâce à une succession de transmissions/réflexions sur un certain nombre de miroirs/filtres ayant une organisation spécifique, de générer une matrice d'un certain nombre de faisceaux colinéaires.

La pyramide composant la tête matricielle optique de type couronne/pyramide (66) et / ou le dispositif (FIG. 11) de déviation du périscope d'adressage peuvent être composés d'un agencement, p.ex. (67A) d'un certain nombre de pyramides de déviation (8), et / ou de cônes de déviation (20), permettant de densifier le nombre de faisceaux issus de la tête matricielle et / ou adressant les disques optiques rotatifs. Selon les variantes, les pyramides de déviation (8), et / ou cônes de déviations (20), sont fixées grâce à un arbre, p.ex. (67A), (68), (69) composé de tiges très fines ou pleines et rigides n'obstruant pas le passage des rayons lumineux issus d'une source.

Plusieurs type d'implantations des pyramides et / ou cônes de déviations sur les arbres sont possibles (FIG. 15). P.ex. en forme de "sapin de noël", les pyramides et / ou cônes sont maintenues en place par un support (67A) plein ou composé de très fines tiges rigides. Les solutions envisagées peuvent ne pas être symétriques (68) ou toutes reliées à la base (69).

Pour ces implantations, il faut tenir compte des contraintes de dimension et du nombre de faisceaux arrivant sur les éléments de déviations pyramidaux et / ou coniques qui seront placés sur un même plan, p.ex. en ligne (70), ou répartis dans l'espace, p.ex. (71) ou (72). En effet selon les dimensions de la pyramide et / ou du cône, et du nombre de faisceaux arrivant sur les miroirs/filtres en vis-à-vis de deux pyramides et / ou cônes positionnés au même niveau, p.ex. (73) et (74), l'espace entre les deux éléments doit permettre de laisser passer, avec un angle pas trop important, l'ensemble des faisceaux (75), (76) pour la pyramide/ou cône (73) et (77), (78) pour la pyramide (74). Pour éviter ce problème, les pyramides et / ou cône peuvent être positionnées sur des niveaux différents et / ou réparties dans l'espace de façon régulière. Le but étant d'obtenir une matrice de faisceaux parallèles régulièrement espacés en sortie et / ou dirigés vers les pistes des disques optiques rotatifs. Il est ainsi possible d'obtenir (FIG. 15) une architecture (71) en trois dimensions, où les lettres majuscules représentent chacune un élément pyramidal. Cela permet d'avoir un certain nombre de pyramides et / ou cônes, p.ex. repérées C et B, sur un même niveau mais ne présentant pas de faces en vis-à-vis. Une solution de répartition en spirale (72) permet également d'éviter les problèmes d'adressage.

Les sources (35) alimentant le périscope d'adressage, p.ex. (8) sont positionnées (FIG. 16), p.ex. sur un certain nombre d'étages/couronnes (79), permettant d'orienter les faisceaux vers des miroirs/filtres (80) positionnés au centre des anneaux sur un socle (56) p.ex. de forme pyramidale, conique, ou autre..., structurant les faisceaux de façon à les rendre colinéaires et / ou à obtenir une matrice d'adressage d'un certain nombre de miroirs/filtres répartis sur un certain nombre de pistes d'un certain nombre de disques optiques rotatifs du dispositif de vidéo projection et / ou capture numérique à balayage multifaisceaux optique.

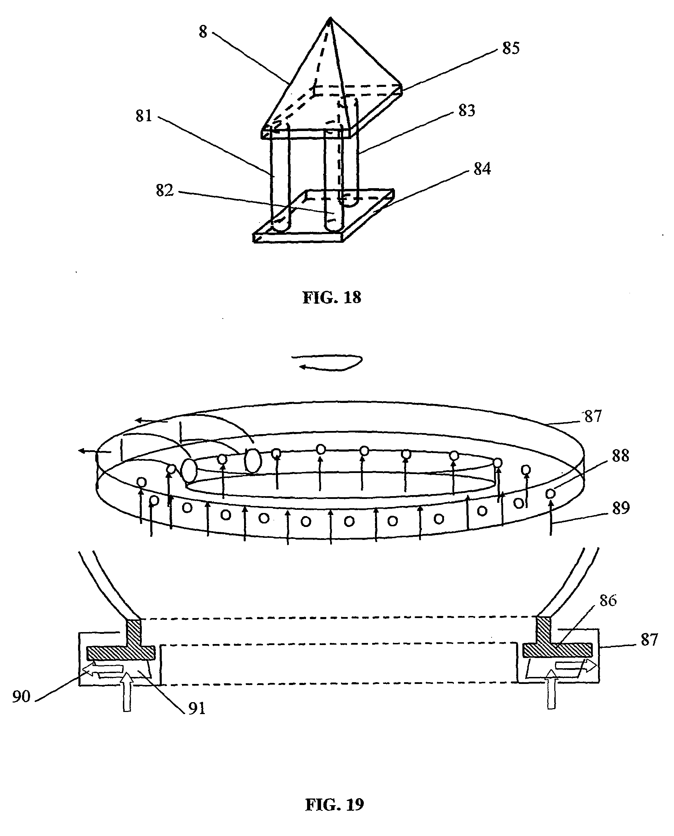

Il peut s'avérer nécessaire pour des raisons de stabilité du système, ou à des fins de corrections statiques et / ou dynamiques, d'utiliser sur la pyramide et / ou le cône du périscope d'adressage un socle intégrant un réglage d'assiette (FIG. 18). Ce dispositif de correction de l'assiette, p.ex. de la pyramide (8), est composé p.ex. de trois éléments (81), (82), (83) de type vis, micro-vérin piézoélectrique,... disposés, p.ex. selon un triangle isocèle entre une base (84) et un socle (85) de maintien de la pyramide (8). Une commande électronique rapide des trois éléments, p.ex. (81), (82), (83) de type vis, micro-vérin piézoélectrique, impose une très faible correction d'assiette.

La rotation de la structure support d'un certain nombre de fenêtres miroirs/filtres, et / ou des disques optiques rotatifs, peut être réalisée à l'aide d'une platine (86) de rotation et de sustentation sur coussin d'air généré dans un anneau creux (87). La sustentation de la platine, solidaire de la structure à mettre en rotation, est réalisée grâce à un certain nombre d'orifices, p.ex. (88) répartis dans un anneau creux (87) selon une organisation spécifique permettant la création d'une zone d'air pressurisée avec un flux d'air entrant compensant les fuites, p.ex. (89) plus communément appelé "coussin d'air". Le mouvement de rotation est ensuite imposé, p.ex. par un autre flux d'air, p.ex. (90) poussant sur les ailettes (91) réparties sur la périphérie de la platine (86) et ayant une orientation spécifique.

Une variante de cette platine de rotation et de sustentation est l'utilisation d'un champ électromagnétique pour réaliser la rotation et la sustentation.

La présente invention est destinée, dans un premier temps, à des applications dans le domaine de la vidéo projection sur une surface et / ou dans un volume quelconque(s) et / ou la capture/numérisation 2D/3D. L'insertion de dispositif de capture et l'utilisation comme source de faisceaux électromagnétiques de longueurs d'ondes spécifiques, p.ex. de type optique visible, infrarouge, ultraviolet, permet d'étendre le domaine d'application au numériseur, au radar, en télécommunication, au niveau navigation routière, maritime, aérienne ou spatiale.

## Revendications

1. ) Dispositif de moteur de vidéo projection / vidéo capteur numérique synchrone à balayage 2D / 3D multifaisceaux électromagnétiques **caractérisé en ce qu'**il comporte:
- une structure de tête matricielle optique radiale (6) et (42) comportant un périscope d'adressage centrale de forme pyramidale (8, 56) ou de forme conique (20), le périscope étant pourvu de miroirs et filtres (9), (14), (28), (29) et (31), ladite structure étant pourvue de sources laser réparties en périphérie autour du périscope d'adressage centrale, les sources pouvant se décliner sous
a) la forme de modules sources optiques (35, 36), ou
b) la forme de têtes matricielles optiques radiales (42) comportant elles aussi une pyramide de miroirs pourvues de sources laser réparties en périphérie,
c) la forme de pavés de miroirs et filtres (43) ;
- un certain nombre de faisceaux lumineux issus de la tête matricielle optique et structurés en forme de matrice, et dirigés vers un certain nombre de disques optiques rotatifs (10), (40), (41) et (44) asservis numériquement pourvus d' un certain nombre de miroirs et filtres,
- le périscope d'adressage central de forme pyramidale ou conique comportant un arrangement spécifique de miroirs et filtres afin que les différents faisceaux (13), (18), (37) et (38) venant des sources laser et redirigés par ledit périscope d'adressage central soient orientés selon les trois dimensions à travers le dispositif,
le dispositif permettant la projection d'une séquence d'images par balayage issues d'une succession de réflexions / transmissions, sur une surface ou dans un volume quelconque, et permettant la capture / numérisation 2D / 3D, à l'intérieur d'un angle solide de 0° à 360°.

2. ) Dispositif selon la revendication 1, **caractérisé en ce qu'**il comporte en périphérie un certain nombre de capteurs optiques (16) de faisceaux électromagnétiques incidents sur celui-ci, en mode numériseur.

3. ) Dispositif selon la revendication 1, **caractérisé en ce qu'**il comporte en périphérie un certain nombre de capteurs optiques (16) de faisceaux électromagnétiques incidents sur celui-ci, issus d'une réflexion des faisceaux émergents du dispositif sur toute surface ou volume quelconque environnante, en mode radar.

4. ) Dispositif selon l'une des revendications précédentes, **caractérisé en ce qu**'il comporte une structure (15) en forme de solide de révolution pourvue d'un certain nombre de fenêtres filtres (14) répartis selon une organisation spécifique, fixe ou en rotation, permettant l'adressage dans l'espace d'un angle solide quelconque.

5. ) Dispositif selon l'une des revendications précédentes, **caractérisé en ce qu'**il comporte des fenêtres miroirs et / ou filtres, pourvus d'une fonction de transfert spécifiques passives ou actives modifiant un certain nombre de propriétés physiques des faisceaux les traversant sur une zone donnée, de forme spécifique fonction de la structure le supportant, où selon la zone d'adressage spatial à l'intérieur de l'angle solide résultant de la fonction de balayage de type ligne ou point, les miroirs et filtres composés d'un certain nombre de couches superposés, ayant des caractéristiques physiques spécifiques, permettent le filtrage spatial, fréquentiel, temporel et une capture d'informations à l'aide d'un élément actif, de type semi-cooducteur ou photodiode, ces fenêtres miroirs et filtres pouvant être, des polariseurs, des filtres à gradient d'indice, des filtres fréquentiels, ou toutes combinaisons de ces derniers.

6. ) Dispositif selon l'une des revendications précédentes, **caractérisé en ce qu'**il comporte un périscope pyramidal d'adressage (8) pourvu d'un certain nombre de structures (A...F) de forme pyramidale, conique, en forme de marches, positionné ou non sur un dispositif de contrôle d'assiette, permettant la déviation ou l'orientation des faisceaux entre les sources ou capteurs et les miroirs et filtres des disques optiques rotatifs,
ce périscope permettant de répartir un certain nombre de sources ou capteurs sur un certain nombre d'étages, ou anneaux, positionnés au dessus ou au dessous des disques optiques rotatifs.

7. ) Dispositif selon l'une des revendications précédentes, **caractérisé en ce qu'**il comporte un périscope pyramidal d'adressage associé à des sources (35, 36) disposées en périphérie, permettant l'adressage simultané d'un certain nombre de miroirs et filtres répartis sur un certain nombre de pistes sur un certain nombre de disques optiques rotatifs (44), ces différentes pistes d'un disque optique rotatif peuvent être sur un même niveau ou bien disposées sur des marches.

8. ) Dispositif selon l'une des revendications précédente, **caractérisé en ce qu'**il comporte un périscope pyramidal d'adressage pourvu d'un dispositif de déviation des faisceaux issus d'un certain nombre de sources, composé d'un certain nombre de miroirs et filtres fixés en surface ou réalisés dans la masse du dispositif, de forme pyramidale, conique, en marches d'escalier, selon une répartition permettent l'adressage simultané d'un certain nombre de secteurs, pistes sur un certain nombre de disques optiques rotatifs, avec un certain nombre d'étages pourvus de modules sources optiques à correction de pointé statique ou dynamique, de générateur de faisceaux colorés, ou de têtes matricielles optiques et d'un dispositif de correction d'assiette statique ou dynamique.

9. ) Dispositif selon l'une des revendications précédentes, **caractérisé en ce qu'**il comporte une variante de disque optique rotatif (57, 58) pourvu d'un périscope embarqué, ayant dans la tranche un certain nombre de couloirs optiques (59) permettant d'adresser un dispositif de déviation , une pyramide ou un cône, fixe ou en rotation positionné sur l'axe central du disque optique rotatif, avec un certain nombre de sources réparties en périphérie du disque optique rotatif, les couloirs optiques pouvant comporter un certain nombre de miroirs et filtres ayant une orientation spécifique permettant d'adresser un certain nombre d'autres miroirs et / ou filtres dans la masse ou en surface du disque optique rotatif.

10. ) Dispositif selon l'une des revendications précédentes, **caractérisé en ce qu'**il comporte un certain nombre de modules sources optiques, ou un certain nombre de générateurs de faisceaux colorés, ou un certain nombre de têtes matricielles optiques, de type couronne / pyramide ou pavés de miroirs et filtres, ou de têtes matricielles optiques comportant un certain nombre de pyramides de déviation.

11. ) Dispositif selon l'une des revendications précédentes **caractérisé en ce qu'**il comporte une platine de rotation et de sustentation sur coussin d'air utilisé au sein d'un système de vidéo projection ou de capture numérique à balayage multifaisceaux, **caractérisé en ce qu'**il permet la rotation des disques optiques rotatifs ou du support de fenêtres filtres, grâce à un flux d'air (90) qui, au travers d'un certain nombre d'orifices répartis de façon spécifique en périphérie de la platine, réalise la sustentation et, où un autre flux d'air impose la rotation à l'aide d'ailettes ayant une orientation spécifique, répartie sur la périphérie du dispositif à mettre en rotation.

12. ) Dispositif selon l'une des revendications précédentes **caractérisé en ce qu'**il comporte une variante de la platine de notation et de sustentation par champ électromagnétique.

## Claims

1. 2D/3D multibeam scanning synchrone video projection and / or digital recording device **characterized by**:
- a radial optical matrix head structure (6) an (42) composed of a pyramidal-shaped (8, 56) or cone-shaped (20) central addressing periscope, said periscope is equipped with mirrors and filters (9), (14), (28), (29) and (31), the aforesaid structure being equipped of lasers sources shared out at the central addressing periscope periphery, where the sources may be declined
a) as optical sources modules (35, 36), or
b) as radial optical matrix heads (42) with a pyramid of mirrors with lasers sources at the periphery,
c) as pavements of mirrors and filters (43);
- a certain number of light beams, from the optical matrix head, structured as matrix, and pointing to a certain number of optical rotating discs with a certain number of mirrors and filters (10), (40), (41) and (44) digitally locked,
- the pyramidal or cone-shaped central addressing periscope composed of a specific arrangement of mirrors and filters so that different beams (13), (18), (37) and (38), from lasers sources and redirected by the aforesaid central addressing periscope, could be oriented in the three dimensions through the device,
- the device allowing the projection of an images sequence by scanning from a series of reflections / transmissions, onto any surface or into any volume, and allowing the 2D or 3D recording / digitisation, within a solid angle from 0° to 360°.

2. A device according to claim 1 **characterized by** a certain number of incident electromagnetic beams sensors (16) at the periphery, as digitiser.

3. A device according to claim 1 **characterized by** a certain number of incident electromagnetic beams sensors (16) at the periphery, from an emergent beams reflection of the device onto any surface or into any volume, as radar.

4. A device according to any one of the previous claims **characterized by** a revolution solid-shaped structure (15) with a certain number of filters windows (14) shared out with specific layout, fixed or in rotation, enabling spatial addressing of any solid angle.

5. A device according to any one of the previous claims **characterized by** mirrors and / or filters windows provided with a specific passive or active transfer function modifying a certain number of beams physical properties crossing them on a given area, with a specific shape function of the structure, where, according to the spatial addressing zone inside a solid angle from the line or point type scanning function, mirrors and filters composed of a certain number of superimposed layers, having specific physical characteristics, enable spatial, frequency, temporal filtering and a recording of information through an active element, as semi-conductor or photodiode, these mirrors / filters windows could be polarising filters, index gradient filters, frequency filters or any combination of these last ones.

6. A device according to any one of the previous claims **characterized by** a pyramidal-shaped addressing periscope (8) where a certain number of structures, pyramidal-shaped, cone-shaped, steps-shaped, positioned (A...F) or not on a trim-corrected device, enabling deflection or orientation of beams between sources or sensors and mirrors and filters of optical rotating discs, this periscope allowing to shape out a certain number of sources or sensors on a certain number of levels, or rings, positioned above or below optical rotating discs.

7. A device according to any one of the previous claims **characterized by** a pyramidal-shaped addressing periscope associated with sources (35, 36) arranged at the periphery, allowing the simultaneous addressing of a certain number of mirrors / filters shared out on a number of sectors on a number of optical rotating discs (44), where these different sectors of an optical rotating disc are on the same level or placed on steps.

8. A device according to any one of the previous claims **characterized by** a pyramidal-shaped addressing periscope fits out a deflection device of beams, from a certain number of sources, being composed of a number of mirrors / filters fixed over the surface or engraved in the device, pyramidal-shape, cone-shaped, steps shaped, according to an arrangement enabling simultaneous addressing of a certain number of sectors, on a certain number of optical rotating discs with a certain number of levels composed of optical sources modules having static or dynamic pointing correction, of coloured pixel generators, or optical matrix heads and a static or dynamic trim-corrected device.

9. A device according to any one of the previous claims **characterized by** a variant of the optical rotating disc (57, 58) with an on-board periscope having a certain number of optical lanes (59) allowing to address a deflection device, a pyramid or a cone, fixed or in rotation arranged on the central axis of the optical rotating disc, with a certain number of sources shared out at the periphery of the optical rotating disc, the optical lanes may have a certain number of mirrors and filters having a specific orientation allowing to address a certain number of other mirrors and / or filters laid over the surface or engraved in the optical rotating disc device.

10. A device according to any one of the previous claims **characterized by** a certain number of optical sources modules, or certain number of coloured pixel generators, or a certain number of optical matrix heads, crowns / pyramidal-shaped or pavements of mirrors and filters, or optical matrix heads with a number of deflection pyramid.

11. A device according to any one of the previous claims **characterized by** a rotating and lift stage on air-cushion used inside a multibeam scanning video projection and / or digital recording device, **characterized by** the rotation of optical rotating discs or stand structure of filters windows, by means of an air flow (90) which, through a certain number of openings shared out in a specific way at the periphery of the stage, accomplishes the lift and, where another air flow imposes the rotation by means of fins having a specific orientation, shared out at the periphery of the device to set in rotation.

12. A device according to any one of the previous claims **characterized by** another embodiment of the rotating and lift stage performed by electromagnetic field.

## Patentansprüche

1. Synchrone digitale Videoprojektions-/Videosensorvorrichtung mit 2D/3D-Abtastung mehrerer elektromagnetischer Strahlen, **dadurch gekennzeichnet, dass** sie Folgendes aufweist:
- eine radiale optische Matrixkopfstruktur (6) und (42), umfassend ein zentrales Adressierungsperiskop mit pyramidenahnlicher Form (8, 56) oder konischer Form (20), wobei das Periskop mit Spiegeln und Filtern (9), (14), (28), (29) und (31) versehen ist, wobei die genannte Struktur mit Laserquellen versehen ist, die an der Peripherie um das zentrale Adressierungsperiskop herum verteilt sind, wobei die Quellen folgende Formen aufweisen können:
a) die Form optischer Quellmodule (35, 36), oder
b) die Form radialer optischer Matrixköpfe (42), welche ebenfalls eine Pyramide aus Spiegeln, welche mit an der Peripherie verteilten Laserquellen versehen sind, umfassen,
c) die Form von Spiegel- und Filterkacheln (43);
- eine bestimmte Anzahl von Lichtstrahlen, welche aus dem optischen Matrixkopf austreten und in Form einer Matrix strukturiert sind und zu einer bestimmten Anzahl digital angesteuerter drehbarer optischer Scheiben (10), (40), (41) und (44), welche mit einer bestimmten Anzahl an Spiegeln und Filtern versehen sind, gelenkt werden,
- das zentrale Adressierungsperiskop mit pyramidenähnlicher oder konischer Form, welches eine spezifische Anordnung von Spiegeln und Filtern umfasst, damit die verschiedenen Strahlen (13), (18), (37) und (38), die von den Laserquellen ausgehen und vom genannten zentralen Adressierungsperiskop umgelenkt werden, über die Vorrichtung dreidimensional ausgerichtet werden,
wobei die Vorrichtung die Projektion einer Bildsequenz durch Abtastung einer Abfolge von Reflexionen/Übertragungen, auf einer beliebigen Oberfläche oder in einem beliebigen Raum, ermöglicht und das 2D/3D-Erfassen/-Digitalisieren innerhalb eines Raumwinkels von 0° bis 360° ermöglicht.

2. Vorrichtung nach Anspruch 1, **dadurch gekennzeichnet, dass** sie, als Digitalisierer, an der Peripherie eine bestimmte Anzahl optischer Sensoren (16) für auf diese auftreffende elektromagnetische Strahler aufweist.

3. Vorrichtung nach Anspruch 1, **dadurch gekennzeichnet, dass** sie, als Radar, an der Peripherie eine bestimmte Anzahl optischer Sensoren (16) für auf diese auftreffende elektromagnetische Strahlen, die von einer Reflexion der aus der Vorrichtung austretenden Strahlen auf einer beliebigen Oberfläche oder in einem beliebigen umgebenden Raum herrühren, aufweist.

4. Vorrichtung nach einem der vorangehenden Ansprüche, **dadurch gekennzeichnet, dass** sie eine Struktur (15) drehfester Form aufweist, die mit einer bestimmten Anzahl von Filterfenstern (14) versehen ist, die nach einer spezifischen Anordnung, fast oder drehber, verteilt sind und die Adressierung im Raum eines beliebigen Raumwinkels ermöglichen.

5. Vorrichtung nach einem der vorangehenden Anspruche, **dadurch gekennzeichnet, dass** sie Spiegel- und/oder Filterfenstet, die mit einer spezifischen aktiven oder passiven Übertragungsfunktion versehen sind, welche eine bestimmte Anzahl der physikalischen Eigenschaften der diese in einem bestimmten Bereich durchquerenden Strahlen verändert, mit einer spezifischen Form entsprechend der sie tragenden Struktur aufweist, wobei entsprechend dem räumlichen Adressierungsbereich innerhalb des Raumwinkels, der sich aus der punkt- oder linienweisen Abtastfunktion ergibt, die aus einer bestimmten Anzahl übereinanderliegender Schichten bestehenden Spiegel und Filter spezifische physikalische Eigenschaften besitzen, die die raum-, frequenz-, zeitbezogene Filterung und eine Informationserfassung mithilfe eines aktiven Elements, vom Typ Halbleiter oder Fotodiode, ermöglichen, wobei diese Spiegel- und Filterfenster Polarisierer, Gradientenindexfilter, Frequenzfilter oder beliebige Kombinationen dieser sein können.

6. Vorrichtung nach einem der vorangehenden Ansprüche, **dadurch gekennzeichnet, dass** sie ein pyramidenförmiges Adressierungsperiskop (8) umfasst, das mit einer bestimmten Anzahl von Strukturen pyramidaler, konischer, stufenartiger Form versehen ist und auf einer Trimmsteuerungsvorrichtung positioniert (A...F) ist oder nicht, welches die Ableitung oder Ausrichtung der Strahlen zwischen den Quellen oder Sensoren und den Spiegeln und Filtern der drehbaren optischen Scheiben ermöglicht, wobei dieses Periskop es ermöglicht, eine bestimmte Anzahl von Quellen oder Sensoren auf einer bestimmten Anzahl von Ebenen, oder Ringen, die ober- oder unterhalb der drehbaren optischen Scheiben positioniert sind, anzuordnen.

7. Vorrichtung nach einem der vorangehenden Ansprüche, **dadurch gekennzeichnet dass** sie ein pyramidenförmiges Adressierungsperiskop umfasst, das an der Peripherie angeordneten Quellen (35, 36) zugeordnet ist, welches die gleichzeitige Adressierung einer bestimmten Anzahl von Spiegeln und Filtern ermöglicht, die an einer bestimmten Anzahl von Spuren an einer bestimmten Anzahl von drehbaren optischen Scheiben (44) verteilt sind, wobei diese unterschiedlichen Spuren einer drehbaren optischen Scheibe auf einer gleichen Ebene oder auf Stufen liegen können.

8. Vorrichtung nach einem der Vorangehenden Ansprüche, **dadurch gekennzeichnet, dass** sie ein pyramidenförmiges Adressierungsperiskop umfasst, das mit einer Vorrichtung zur Ableitung der von einer bestimmten Anzahl von Quellen stammenden Strahlen versehen ist, welche aus einer bestimmten Anzahl von Spiegeln und Filtern besteht, die auf der Oberfläche der Vorrichtung befestigt oder in deren Masse eingearbeitet sind, eine pyramidale, konische, stufenartige Form besitzt, nach einer Verteilung, die die gleichzeitige Adressierung einer bestimmten Anzahl von Sektoren, Spuren an einer bestimmten Anzahl von drehbaren optischen Scheiben, mit einer bestimmten Anzahl von Ebenen, die mit optischen Quellmodulen mit statischer oder dynamischer Ausrichtungskomsktur, Generatoren für farbige Strahlen, oder optischen Matrixköpfen und einer statischen oder dynamischen Trimmkorrekturvorrichtung versehen sind, ermöglicht.

9. Vorrichtung nach einem der vorangehenden Ansprüche, **dadurch gekennzeichnet, dass** sie eine Variante einer mit einem eingebauten Periskop (57, 58) versehenen drehbaren optischen Scheibe aufweist, die im Querschnitt eine bestimmte Anzahl von optischen Kanälen (59) besitzt, die es ermöglichen eine pyramiden oder konusartige, feste oder drehbare Ablenkungsvorrichtung zu adressieren, die auf der Mittelachse der drehbaren optischen Scheibe positioniert ist, mit einer bestimmten Anzahl von Quellen, die an der Peripherie der drehbaren optischen Scheibe verteilt sind, wobei die optischen Kanäle eine bestimmte Anzahl von Spiegeln und Filtern mit einer spezifischen Ausrichtung aufweisen können, die es ermöglichen, eine bestimmte Anzahl anderer Spiegel und/oder Filter in der Masse oder an der Oberfläche der drehbaren optischen Scheibe zu adressierten.

10. Vorrichtung nach einem der vorangehenden Ansprüche, **dadurch gekennzeichnet, dass** sie eine bestimmte Anzahl von optischen Quellmodulen oder eine bestimmte Anzahl von Generatoren für farbige Strahlen oder eine bestimmte Anzahl von optischen Matrixköpfen, vom Typ Krone/Pyramide oder Kacheln von Spiegeln und Filtern, oder von optischen Matrixköpfen mit einer bestimmten Anzahl von Ablenkungspyramiden aufweist.

11. Vorrichtung nach einem der vorangehenden Ansprüche, **dadurch gekennzeichnet, dass** sie eine Platine zur Rotation und zum Auftrieb auf einem Luftkissen, welches innerhalb eines digitalen Videoprojektions- oder Erfassungssystems mit Mehrstrahlenabtastung verwendet wind, aufweist, **dadurch gekennzeichnet, dass** sie die Rotation der drehbaren optischen Scheiben oder des Filterfensterträgers mithilfe eines Luftstroms (90) ermöglicht, der über eine bestimmte Anzahl von Öffnungen, die in spezifischer Weise an der Peripherie der Platine verteilt sind, den Auftrieb bewerkstelligt, und wo ein anderer Luftstrom die Rotation mithilfe von Schaufeln mit spezifischer Ausrichtung, die an der Peripherie der in Rotation zu versetzenden Vorrichtung verteilt sind, bewirkt.

12. Vorrichtung nach einem der vorangehenden Ansprüche, **dadurch gekennzeichnet, dass** sie eine Variante der Platine zur Rotation und zum Auftrieb durch ein elektromagnetisches Feld aufweist.
